# EUROPEAN PATENT APPLICATION

(11) **EP 1 772 822 A1**
(43) Date of publication of application: **11.04.2007**
(21) Application number: 06254905.0
(22) Date of filing: 22.09.2006
(51) Int. Cl.: G06Q 30/00, H04L 29/06

(54) **Commercial transaction system with third party referral**

(30) Priority: 05.10.2005 GB 0520238
(71) Applicant: Waterleaf Limited, Douglas Isle of Man IM1 1JA (GB)
(72) Inventor: Oren, Yosi, Misgav 10079 (IL)
(74) Representative: Evens, Paul Jonathan

(57) **Abstract**

A system for conducting commercial transactions comprises an application server (2) in communication with a proxy server (10). The application server (2) hosts a software application program performing commercial transactions and is accessible by a user from a mobile telephone (9) that hosts a corresponding client software program. The client software program receives a user input code identifying a recipient to whom the software application is to be referred. The proxy server (10) then constructs and transmits a referral message to the recipient, the referral message containing: an input code identifying the recipient, a code identifying the user from whom the referral originated, and an address of a download location from which the recipient of the referral message can download the client software program to a different mobile telephone.

## Description

### FIELD OF THE DISCLOSURE

This disclosure relates to a system for conducting online commercial transactions and, more specifically, but not exclusively, to a system for conducting online commercial transactions initiated from mobile platforms such as mobile telecommunication handsets, mobile phones and the like. The system extends to a method of operation of a system for conducting online commercial transactions initiated from mobile platforms.

### BACKGROUND TO THE DISCLOSURE

The use of mobile telecommunication devices, such as mobile phones, for voice and data communication has increased rapidly in recent years, and such rapid growth is expected to continue for the foreseeable future. Increasingly, such mobile telecommunication devices are not only being used for voice and data communication, but are also used for entertainment purposes, such as multimedia messaging, mobile gaming, and the like.

Current mobile phones are capable of running a number of different embedded application technologies, such as J2ME, Brew, Symbian, Linux and Windows Mobile, to name but a few. These application technologies provide suitable platforms for the development of a wide range of different applications for mobile telecommunication devices.

The Internet, which is all pervasive, provides a suitable platform for conducting business-to-business (B2B) and business-to-consumer (B2C) commercial transactions, particularly on the World Wide Web of the Internet. A large number of disparate commercial enterprises currently conduct B2C commercial transactions by means of the Internet. Examples of such commercial enterprises are retailers, such as Amazon^{™}; auctioneers, such as eBay^{™}; online casinos; sports betting entities; and stockbrokers, such as E-trade^{™}.

As a result of the recent rapid growth in mobile telecommunication, a need has arisen to make existing web-based B2C commercial applications available from mobile phones. This is commonly achieved by converting an existing B2C website into a format that is supported by mobile phone browsers, such as WAP, which are inherently of restricted functionality relative to full-function Web browsers. Due to the inherent limitations of mobile phone browsers, it is often not possible to convert certain elements of existing B2C websites for use on WAP browsers, such as, for example, rich Flash components, Java applets and downloadable applications or interfaces. Further, mobile communication poses a security risk, as transmission signals are susceptible to eavesdropping and interception, necessitating the introduction of additional security measures.

For this reason, in order to make existing B2C commercial applications available from mobile phones, it becomes necessary to create a more complex B2C application that is compatible both with legacy elements of the commercial application, as well as with small-sized mobile device displays. Such an approach is tedious and unnecessarily expensive. In particular, it becomes necessary to establish an authentication and security system that can be used on mobile phone browsers, yet remains compatible with that of the existing B2C website, which is time-consuming.

A B2C commercial application consists, typically, of an application server that executes a server software program, and at least one user access facility that communicates with the application server by means of a communication network such as the Internet, and that executes a client software program. The client software program receives requests and instructions from a user and transmits these to the application server along the communication network. The server software program generates responses corresponding to the received requests and transmits the responses back to the user access facility, where the client software program displays them to the user in an intelligible manner in the context of the commercial application. The client software program may either be downloaded and installed on the user station, or may consist of code that executes from within an Internet browser.

A system and method for conducting online commercial transactions, such as purchasing and redeeming credit and placing wagers on games of chance offered by an online casino, is described in PCT application No. 0420409.5, which is assigned to the assignee of the present invention, and the entire contents of which are incorporated herein by reference. The system of the 042040.9 PCT application includes an application server accessible over the Internet that enables authorized users to access the commercial application by means of unique application server login parameters. The commercial application is also made accessible to users from mobile phones (9). This is achieved by interposing a proxy server as an intermediary between the mobile phones and the application server, with all data received from the mobile phones being relayed by the proxy server to the application and vice versa, without having to transfer any application server login parameters between a mobile phone and the proxy server over the air.

### OBJECT

It is an object of this invention to provide a system for conducting online commercial transactions that enables authorized users thereof to refer the system for use to users who are not yet authorized.

It is a further object of this invention to provide a system for conducting online commercial transactions that includes a convenient and efficient support facility.

### SUMMARY

In accordance with this invention there is provided a system for conducting commercial transactions, comprising:

An application server operable to host a software application for performing commercial transactions, the application server being accessible by at least one user from a mobile access terminal that hosts a corresponding client software program
**characterised in that**
the client software program is operable to receive an input code from the user identifying a recipient to whom the software application is to be referred; and
the system includes means for constructing and transmitting a referral message to the recipient, the referral message containing at least
a) the input code identifying the recipient;
b) a code identifying the user from whom the referral originated; and
c) an address of a download location from which the recipient of the referral message can download the client software program to a different mobile access terminal.

Further features of the invention provide for the means for constructing the referral message to be a proxy server communicable with the application server, the proxy server enabling access to the application server from the at least one user's mobile access terminal, for the mobile access terminal to be a mobile telephone having a corresponding telephone number, for the referral message to be an SMS message, for the input code identifying the recipient of the referral message to be a mobile telephone number of the recipient, for the code identifying the user from whom the referral message originated to be a mobile telephone number of the at least one user who made the referral, and for the proxy server to transmit the referral message to an SMS gateway server.

Still further features of the invention provide for the client software program on the at least one user's mobile access terminal to be operable by the user to request help and assistance relating to the software application, for the system to include means for constructing and transmitting a request message pursuant to a request by the at least one user for help and assistance, and for the request message to contain at least
d) a recipient address of a call centre providing help and support services to users of the software application;
e) a code identifying the user from whom the request message originated; and
f) a request for assistance.

Yet further features of the invention provide for the means for constructing and transmitting the request message to be the proxy server, for the proxy server to construct and transmit the request message to the call centre pursuant to receipt of a notification message from the at least one user's mobile access terminal, for the notification message from the at least one user's mobile access terminal to be submitted to the proxy server by means of the Internet when the mobile access terminal is Internet-enabled and as an SMS message when the mobile access terminal is not Internet-enabled, and for the code identifying the user from whom the request message originated to the mobile telephone number of the at least one user from whom the request originated.

The invention extends to a method of operation of a system for conducting commercial transactions, including the steps of:
hosting, on an application server, a software application for performing commercial transactions;
providing access to the application server by at least one user from a mobile access terminal hosting a corresponding client software program
**characterised in that**
the method includes further steps of
receiving an input code from the user identifying a recipient to whom the software application is to be referred; and
constructing and transmitting a referral message to the recipient, the referral message containing at least
   a) the input code identifying the recipient;
   b) a code identifying the user from whom the referral originated; and
   c) an address of a download location from which the recipient of the referral message can download the client software program to a different mobile access terminal.

There is further provided for constructing the referral message by means of a proxy server communicable with the application server, the proxy server enabling access to the application server from the at least one user's mobile access terminal, for using mobile telephones as the mobile access terminals of the at least one user and the recipient, respectively, the mobile telephones having corresponding telephone numbers, for constructing the referral message as an SMS message, for using the mobile telephone number of the recipient as the input code identifying the recipient of the referral message, for using the mobile telephone number of the at least one user who made the referral as the code identifying the user from whom the referral message originated, and for transmitting the referral message from the proxy server to an SMS gateway server.

There is still further provided for receiving a request from the at least one user's mobile access terminal for help and assistance relating to the software application, for constructing and transmitting a request message pursuant to the request by the at least one user for help and assistance, and for constructing the request message to contain at least
a) an address of a call centre providing help and support services to users of the software application;
b) a code identifying the user from whom the request message originated; and
c) a request for assistance.

There is yet further provided for constructing and transmitting the request message by means of the proxy server, for constructing and transmitting the request message to the call centre pursuant to receipt of a notification message from the at least one user's mobile access terminal, for submitting the notification message from the at least one user's mobile access terminal to the proxy server by means of the Internet when the mobile access terminal is Internet-enabled and as an SMS message when the mobile access terminal is not Internet-enabled, and for using the mobile telephone number of the at least one user from whom the request originated as the code identifying the user from whom the request message originated.

### BRIEF DESCRIPTION OF THE DRAWINGS

Embodiment of the invention are described below, by way of example only, and with reference to the abovementioned drawings, in which:
Figure 1 is a functional representation of a system for conducting online commercial transactions;
Figures 2A and 2B are flow charts of a registration process to enable use of the system of Figure 1 from a mobile phone;
Figure 3A, 3B, 3C and 3D are flow charts of a login process to enable use of the system of Figure 1 from a mobile phone;
Figure 4 is a flow chart of a payment instrument registration process for the system of Figure 1, performed from a mobile phone;
Figures 5A and 5B are flow charts of a purchase transaction on the system of Figure 1, conducted from a mobile phone;
Figure 6 is a flow chart of a third-party referral on the system of Figure 1, initiated from a mobile phone; and
Figure 7 is a flow chart of a callback request on the system of Figure 1, initiated from a mobile phone.

### DETAILED DESCRIPTION OF EMBODIMENTS

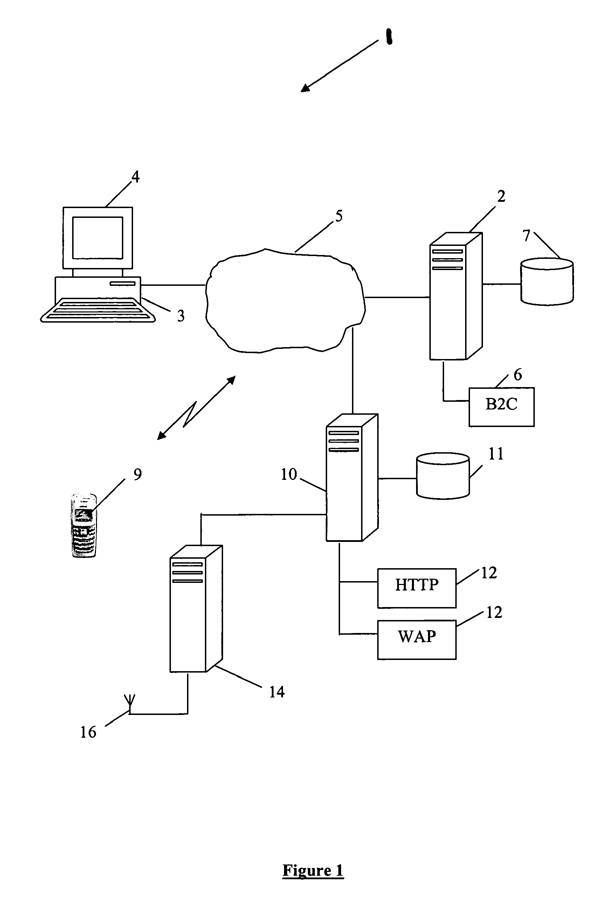

Referring to Figures 1 to 7, in which like features are indicated by like numerals, a system for conducting online commercial transactions is indicated generally by reference numeral (1). This embodiment of the system will be described with particular reference to commercial transactions that involve the purchase and redemption of credit and the placement of wagers on games of chance offered by an online casino. It is to be clearly understood, however, that the use of the system is not limited to this particular application, but extends also to its use in other types of commercial transactions.

As illustrated in Figure 1, the system (1) includes an application server (2) that is accessible from at least one user access facility in the form of a computer workstation (3) remote from the application server. The computer workstation (3), which has an associated display (4), communicates with the application server (2) by means of a communication network (5) that is, in this embodiment, the Internet. The application server (2) hosts a B2C website (6) that is accessible by a user, from the computer workstation (3), by means of a full-function Internet Web browser such as, for example, Microsoft Internet Explorer or Mozillla Firefox. These particular web browsers are well known and commercially available from the Microsoft Corporation of Redmond, Washington, USA and the Mozilla Foundation of California, USA, respectively.

The B2C website (6) provides the user with access to a commercial application in the form of an online casino that offers one or more games of chance for play by the user. The computer workstation (3) executes one or more client software programs, each of which simulates the progress of a different game of chance. The generic operation of the client software programs will be described in more detail in the description that follows.

The application server (2) includes a random event generator (not shown) in the form of a computer program that is executable to generate random events upon which the outcome of any one of the games of chance is based. As an illustration, one of the client software programs on the computer workstation (3) simulates a game of roulette and, in this instance, the random event generation program (not shown) is executable to select, on a random basis, an integer between 0 and 36 that is displayed by the client software program on the display (4) as a simulation of a rotating roulette wheel coming to a standstill and a counter-rotating ball coming to rest at a corresponding one of 37 demarcated positions on the roulette wheel. As a further illustration, another one of the client software programs simulates a game of draw poker and the random event generation program is executable to generate five random integers between 1 and 52 that are rendered to the user by the corresponding client software program, on the display, as five playing cards making up a particular hand of poker.

A user wishing to use the system (1) and the B2C website (6) to perform commercial transactions such as, for example, purchasing credit, placing a wager on a turn of any one of the games of chance, and cashing out accumulated credit, is first required to register as an authorized user and to create an account on the application server (2). In order to register, the user is required to complete a registration form (not shown) that is displayed to the user as part of the B2C website. The registration form requires the user to furnish personal particulars such as, for example, name, residential address, date of birth and e-mail address. Once the user has completed the form, the application server (2) assigns a specific login name to the user and prompts the user to select a private password. The data pair consisting of the user's login name and password will, for convenience, be referred to in this specification as the User Information. The application server (2) stores the User Information away in an application user database (7) associated with the application server (2). Once registered in this manner, the user is an authorised and is free to use the online casino B2C application by merely entering his User Information again when accessing the B2C website (6).

It will be appreciated by those skilled in the art that the system (1) as described above enables any user having an Internet-enabled computer workstation (3) to register on the application server (2) by means of the B2C website and to use the underlying online casino application on the application server (2) to conduct commercial transactions. In this embodiment, for example, the commercial transactions are gaming-related, transactions. Furthermore, the computer workstation (3) can be a desktop computer, a laptop computer or a handheld computer ("PDA") capable of Internet access by means of a wired or a wireless network.

In order to provide access to the B2C application from a mobile telecommunication device such as a mobile phone (9), the system (1) includes a proxy server (10) having an associated proxy database (11). The proxy server (10) is communicable with the application server (2) by means of the Internet, and hosts a proxy website (12) which is accessible by the user in order to register to access the B2C application from the mobile phone (9). The mobile phone (9) is Internet-enabled, preferably by means of communication standards such as General Packet Radio Service ("GPRS") or Universal Telephone Mobile Service ("UMTS"), which are both well known in the art. The proxy website (12) is available to the user in either one or both of a Hypertext Transfer Protocol ("HTTP") version or a Wireless Application Protocol ("WAP") version. Additionally, the proxy website (12) may also be available in Hypertext Transfer Protocol (Secure) ("HTTPS") format for secure transactions, if required. In order to register for mobile access to the B2C application, the user must first be registered on the application server (2) and the user's User Information must already be stored in the application user database (7).

The proxy server (10) is also communicable with a messaging gateway server (14) that relays messages conforming to the well-known Short Message Service ("SMS") standard onto a mobile telecommunication network.

It is desired to permit users to access the B2C application from mobile phones (9) without necessitating any modification of the B2C application itself and of any subsystem thereof, such as a user identification and security subsystem (not shown). This objective is achieved by interposing the proxy server (10) as an intermediary element between the mobile phone (9) and the application server (2), with all data received by the proxy server from the mobile phone being relayed by the proxy server to the application server and vice versa, and without having to transfer the User Information between a mobile phone and the proxy server over the air.

### Registration for Mobile Use

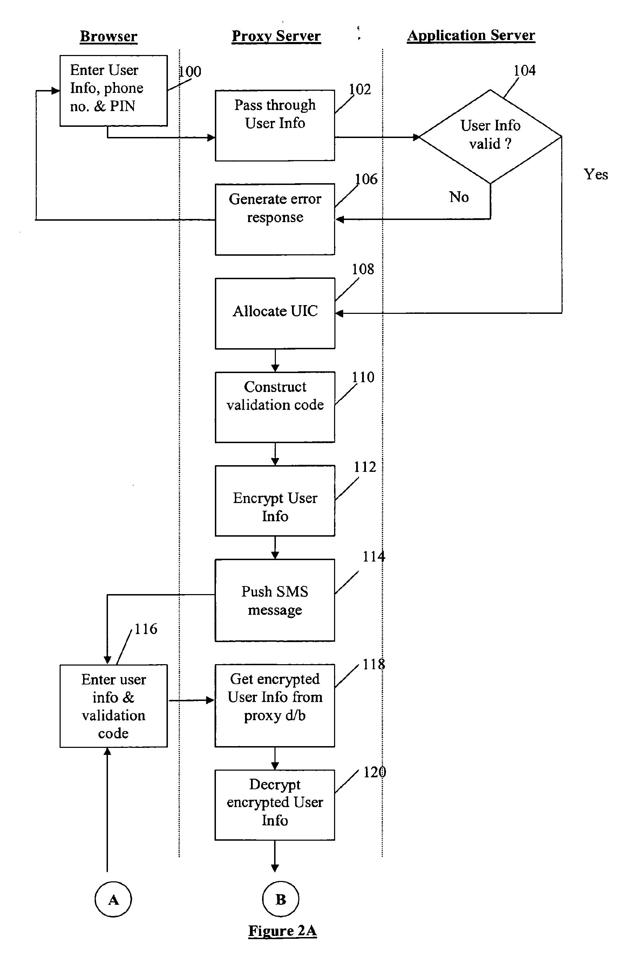

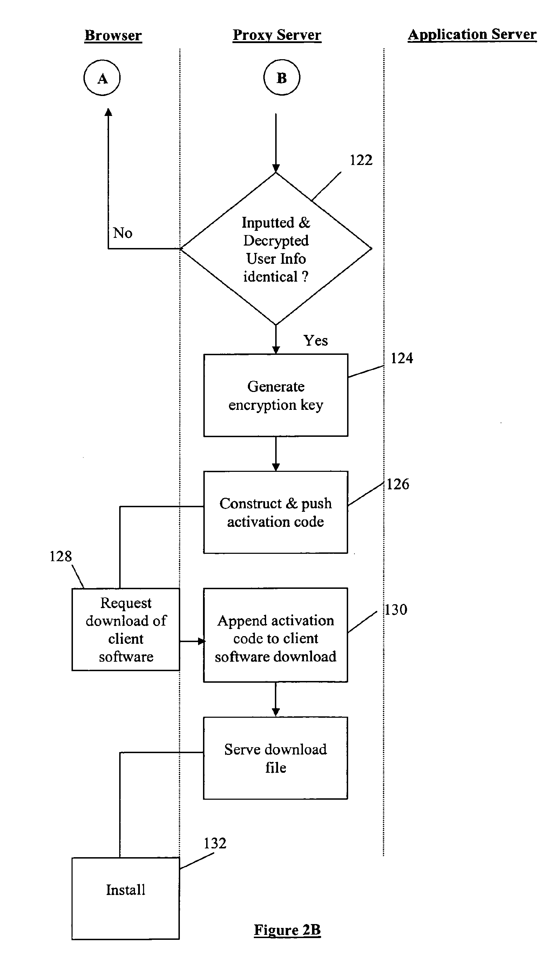

The registration process is described hereunder with reference to Figures 2A and 2B.

In order to register for mobile access to the B2C application, a user selectively accesses either the HTTP version or the WAP version of the proxy website (12) by means of either the computer workstation (3) or the mobile phone (9), respectively. The proxy website (12) presents to the user a mobile registration form (not shown) in which the user is required to enter, at step 100, his User Information, that is, username and password as previously registered on the application server (2), together with the following additional information:
1. a telephone number of the mobile phone (9) from which access to the B2C application is desired; and
2. a user-selected Personal Identification Number ("login PIN code") in a format that is convenient for entering on a keypad of the mobile phone (9) such as, for example, a 4-digit numeric code.

The proxy server (10) passes, at step 102, the User Information on to the application server (2), which checks the validity of the User Information against the contents of the application user database (7), as indicated by step 102. The application server (2) then notifies the proxy server (10) whether the User Information has been found to be valid or invalid. If the User Information is invalid, the proxy server (10) generates an error response at step 106 and displays an error message to the user on the proxy website (12). If the User Information is found to be valid, the mobile registration proceeds to the next stage, in which the proxy server (10):
- first allocates, at step 108, a user identification code ("UIC") to the user and stores the UIC in the proxy database (11);
- then constructs a validation code, at step 110, in the form of a two-part code separated by a separator character that is, in this embodiment a 'hyphen' character. The first part of the validation code is the UIC, while the second part of the validation code is a four-character encryption code that is automatically generated by the proxy server (10) and stored away in the proxy database (11), indexed by UIC; and
- also encrypts, at step 112, the login PIN code and the User Information using a HASH function of the four-character encryption code as an encryption key.

In order to ascertain that the user who is using the mobile phone (9) is, in fact, the same user that registered on the application server (2), an SMS message standard is pushed, at step 114, to the telephone number of the mobile phone (9) provided by the user in step 100 above. The pushed message includes the validation code as constructed by the proxy server (10), as well as a hyperlink address.

If the user is registering for mobile access from the computer workstation (3) via the HTTP version of the proxy website (12), he is merely required to enter the validation code contained in the pushed message into the mobile registration form in order to complete the mobile registration process. If, on the other hand, the user is registering from the WAP version of the proxy website (12) by means of the mobile phone (9), the user is required to activate the hyperlink contained in the pushed message, which causes the WAP browser on the mobile phone (9) display a new registration form on the phone. The user is then required to re-enter, at step 116, his User Information once more in this registration form, together with the validation code. In this part of the registration process, the proxy server (10):
1. uses the UIC contained in the first portion of the validation code as an index to retrieve the user's encrypted User Information from the proxy database (11) at step 118;
2. then decrypts the user's encrypted User Information from the proxy database (11), using the inputted validation code as an encryption key, at step 120;
3. compares, at step 122, the decrypted User Information with the inputted User Information;
4. transmits an error response for display to the user in the user's browser if the decrypted and inputted User information is not identical; and
5. stores the inputted User Information securely in the proxy database (11) if the decrypted and inputted User Information is identical.

It will be appreciated by those skilled in the art that the above procedure of: generating the validation code, encrypting the User Information and storing it in the proxy database (11), pushing the validation code to the mobile phone (9), requiring the user to re-enter the User Information and the pushed validation code, using the re-entered validation code to decrypt the stored, encrypted User Information from the proxy database, and comparing the decrypted User Information with the re-entered User Information is both necessary and sufficient to ensure that the user who is has requested mobile access to the B2C application is indeed the same user that registered on the application server (2).

Once the correct identity of the registrant has been verified as outlined above, the proxy server (10):
1. generates automatically, at step 112, a 16-character encryption key and stores the encryption key in the proxy database (11). The proxy server (10) uses the UIC as an index to locate the encryption key in the proxy database (11) that corresponds to the user;
2. constructs, at step 126, a two-part activation code in which the two parts are separated by a separator character, in this embodiment a "hyphen" character. The first part of the activation code is the UIC as allocated to the user by the proxy server (10) and which is stored in the proxy database (11), while the second part of the activation code is the 16-character encryption key generated in step 124;
3. encrypts the User Information using a Hash function of the user-selected PIN as an encryption key and stores the encrypted user information in the proxy database (11) indexed by UIC; and
4. pushes a WAP message to the mobile phone (9) that contains an acknowledgement that the decrypted and re-entered User Information is identical, a download link to a dedicated web page from which a mobile client software program associated with the B2C application can be downloaded to the mobile phone (9), and the activation code generated in step 126 above for the mobile client software program;

The 16-character encryption key as contained in the second part of the activation code will become an active key used to encrypt application data that is sent by the mobile phone (9) to the proxy server (10) during the user's first session in which he accesses the B2C application from the mobile phone (9). The operation of the 16-character encryption key will be described in greater detail in the description that follows.

After receipt of the pushed WAP message, the user accesses the dedicated web page to request, at step 128, a download of the mobile client software program. The proxy server (10) appends, at step 130, the activation code to the download file to ensure that the user does not have to enter the activation code on the keypad of the mobile phone (9), which can be tedious and time-consuming. It will be appreciated by those skilled in the art that the activation code acts as a unique identifier that is injected into the mobile client software program download and that is unique to that specific B2C application and to that specific user.

Once downloaded from the proxy server (10), the mobile client software program can be installed on the mobile phone (9), at step 132, and the B2C application is then ready to be accessed by the user. Installation of the mobile client software program results in an application icon (not show) being displayed on the mobile phone (9). The function of the mobile client software program is analogous to that of the client software program on the computer workstation (3) described above, namely, in this embodiment, to simulate the progress of a game of chance offered by the online casino.

### Application Login

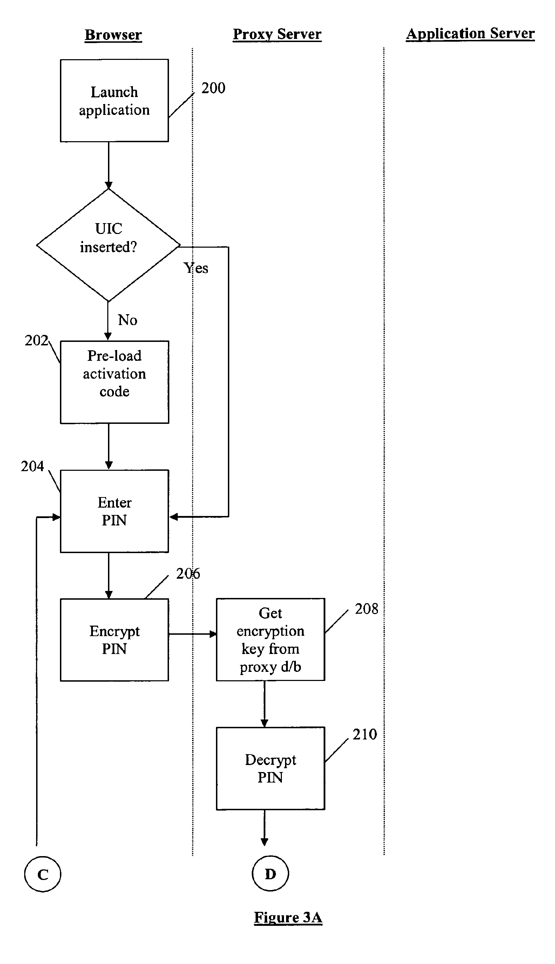

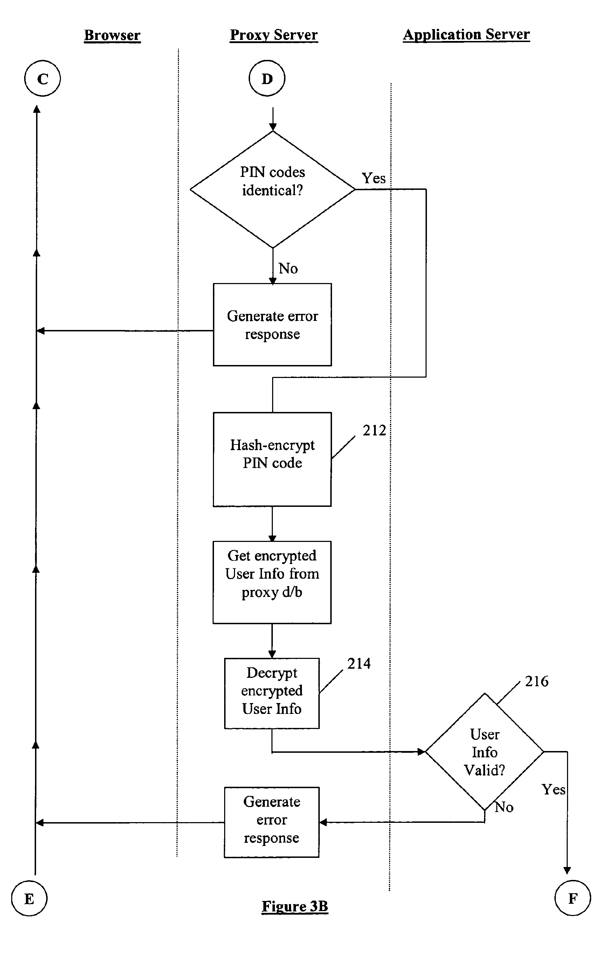

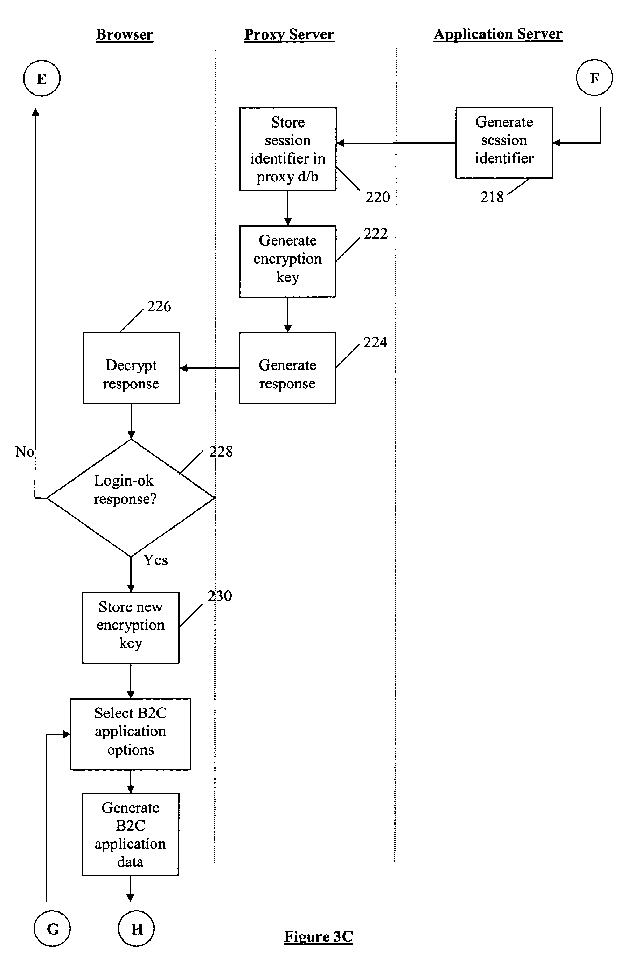

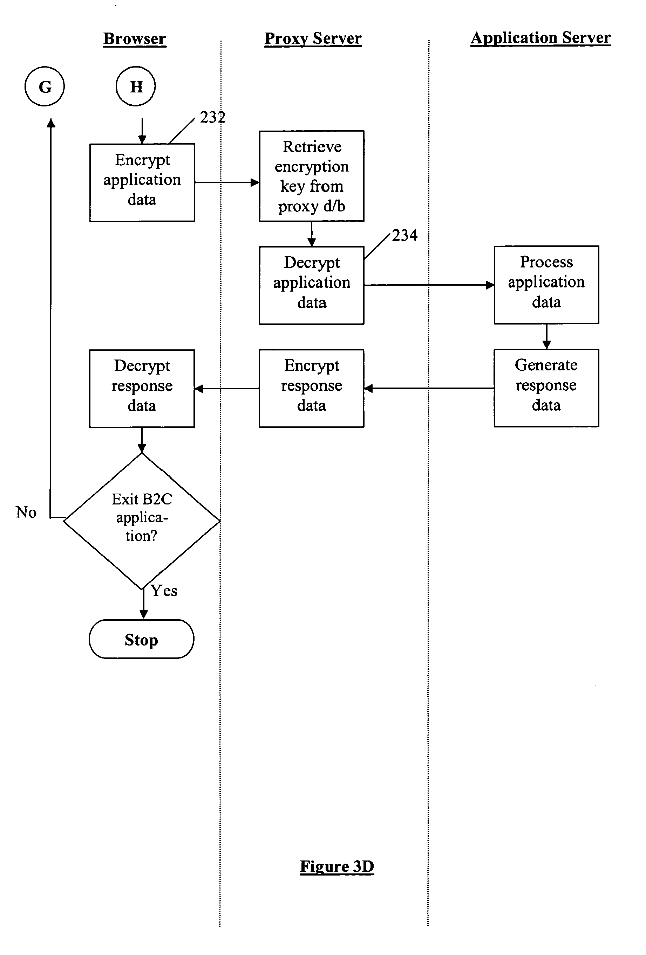

The application login process is described hereunder with reference to Figures 3A and 3D.

The user launches the mobile client software program by activating the corresponding application icon (not shown) on the mobile phone (9) at step 200. Activation of the application icon (not shown) for a first time after registration for mobile use of the B2C application causes an application splash screen to be displayed on the mobile phone (9). Pressing of any key on the mobile phone (9) causes the splash screen to be replaced by a form having a field in which the user must enter the activation code. In order to assist the user, this field displays, at 202, the proxy server-generated activation code, which the user is merely required to confirm. After the application code has been confirmed, the user is required to enter, at step 204, his pre-selected 4-digit PIN by means of a keypad (not shown) associated with the mobile phone (9).

In the description that follows, the 16-character encryption key that forms the second part of the activation code will be referred to, for convenience, as the "active encryption key".

The mobile client software program installed on the mobile phone (9) encrypts, at 206, the user-entered PIN, together with game-specific function calls, using the active encryption key. The mobile phone (9) prefixes the encrypted PIN with the UIC and the separator character and transmits the result as a packet to the proxy server (10). The proxy server (10) strips the UIC from the packet and uses the UIC as an index to retrieve, at 208, the user's corresponding encryption key from the proxy database (11), which is identical to the active encryption key on the mobile phone (9) as a result of a successful completion of the registration for mobile use process described in the previous section. The proxy server (10) then decrypts, at step 210, the encrypted PIN received from the mobile phone (9), using the retrieved active encryption key. The resulting decrypted PIN code is HASH-encrypted at step 212 and the result is used as a new encryption key to decrypt, at 214, the user's corresponding encrypted User Information (that is, the user's login name and password) which stored in the proxy database (11). The proxy server (10) transmits the decrypted User Information to the application server (2) to effect a user login transaction to the B2C application at step 216.

If the user login transaction is successful, the application server (2) obtains a session identifier from the B2C application, at step 218, and returns the session identifier to the proxy server (10). The proxy server (10) stores the session identifier in the proxy database (11), at step 220, and transmits an encrypted response to the mobile phone (9), which is constructed as follows:
1. the proxy server (10) encrypts a 'Login-OK' confirmation using the user's active encryption key stored in the proxy database (11);
2. the proxy server (10) generates a new 16-character encryption key, at step 222, and stores it in the proxy database (11) under the user's UIC; and
3. the new encryption key is itself encrypted using the active encryption key and is concatenated, at 224, with the "Login-OK" confirmation described in paragraph 1.) above.

The concatenated string constitutes the response to the login transaction performed by the user on the mobile phone (9).

The mobile client software program on the mobile phone (9) decrypts the response to the login transaction, at step 226, using the active encryption key. If the mobile client software program detects the "Login-OK" response, at step 228, the new 16-character encryption key contained in the response is stored, at 230, in non-volatile memory (not shown) on the mobile phone (9), together with the UIC, as a new activation key. This new encryption key will become the active encryption key for the user's next session of the B2C application. During the user's next session, a further new encryption key will be sent to the mobile phone (9) in the same manner for use in the user's subsequent session, and so on, recursively.

Once the login phase of the commercial transaction has been successfully completed as described above, any application data that is to be transmitted by the mobile phone (9) to the application server (2) is first encrypted, at step 232, with the active encryption key for the current session on the application server. The encryption key for the user's next session on the application server (2), which will already have been stored on the mobile phone (9) lies dormant and unused until the user initiates the next session on the application server, which could be after a considerable period of time. In this manner, the activation code acts as an ongoing encryption key for the transfer of application data to the proxy server (10).

The encrypted application data is appended to the UIC and transmitted by the mobile phone (9) to the proxy server (10) for decryption. Once received by the proxy server (10), the data is decrypted, at 234, and converted and processed for passing to the application server (2) as conventional web-style parameters as if the user had interacted directly with the B2C application on the application server, without the presence of the proxy server (10).

### Registration to Purchase

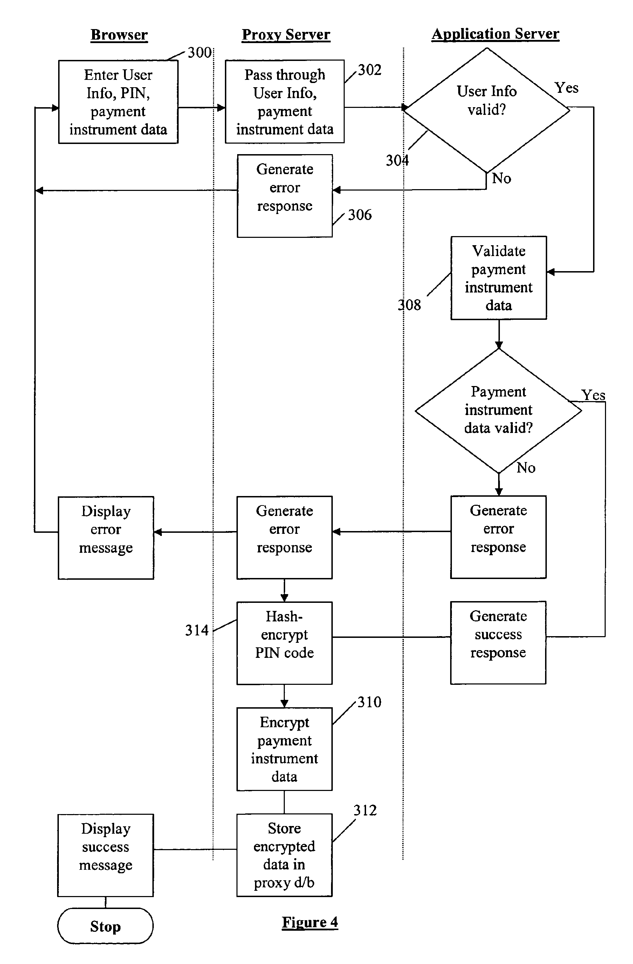

The registration to purchase process is described hereunder with reference to Figure 4.

A common transaction that will be performed by most authorized users on the B2C application is a purchasing transaction to purchase goods and/or services. In the current embodiment, the user performs a purchasing transaction in order to acquire credit in order to place wagers on any of the games of chance offered by the online casino.

In order to purchase goods or services, the user is first required to pre-register one or more payment instruments, such as credit cards, debit cards and the like, one at a time. This registration can be accomplished from an HTTP, a WAP or, more commonly, an HTTPS page, in which the user is required to enter, at step 300, his User Information, together with data relating to the desired payment instrument such as, for example, a credit card number, a credit card type, a payment currency and a billing address. The user is also required to select and enter a purchase PIN code, in particular, a four-digit numeric code that is convenient to enter from the keypad of the mobile phone (9).

The proxy server (10) passes, at step 302, the User Information to the application server (2), which checks the validity of the User Information against the contents of the application user database (7), as represented in step 304. When validity check of the User Information has been completed, the application server (2) notifies the proxy server (10) whether the User Information has been found to be valid or invalid. If the User Information is invalid, the proxy server (10) generates an error response at step 306 and displays an error to the user on the HTTP or WAP page. If the User Information is found to be valid, the payment registration proceeds to the next stage in which:
- the application server (2) validates, at 308, the purchase instrument with a payment gateway (not shown); and
- if the purchase instrument is validated by the payment gateway (not shown) the payment instrument data is encrypted by the proxy server (10) at step 310, and stored in the proxy database (11), at 312. The payment instrument data supplied by the user is encrypted, at step 314, using a Hash function of the user-selected purchase PIN code.
   It will be appreciated that the user may register more than one payment instrument and may utilise any registered payment instrument to effect payment in a particular purchase transaction.

### Purchase Transaction

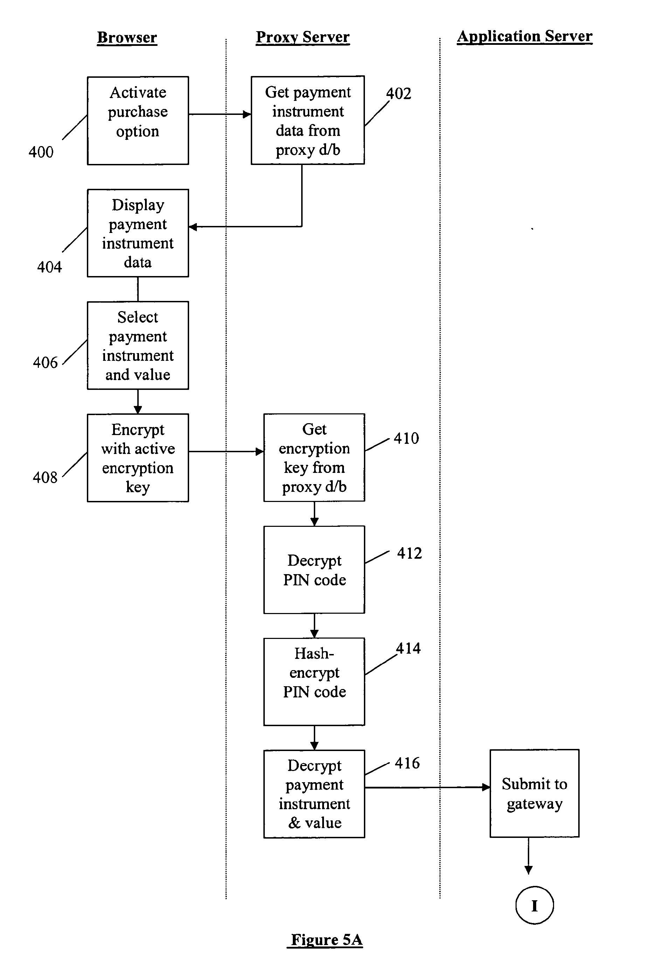

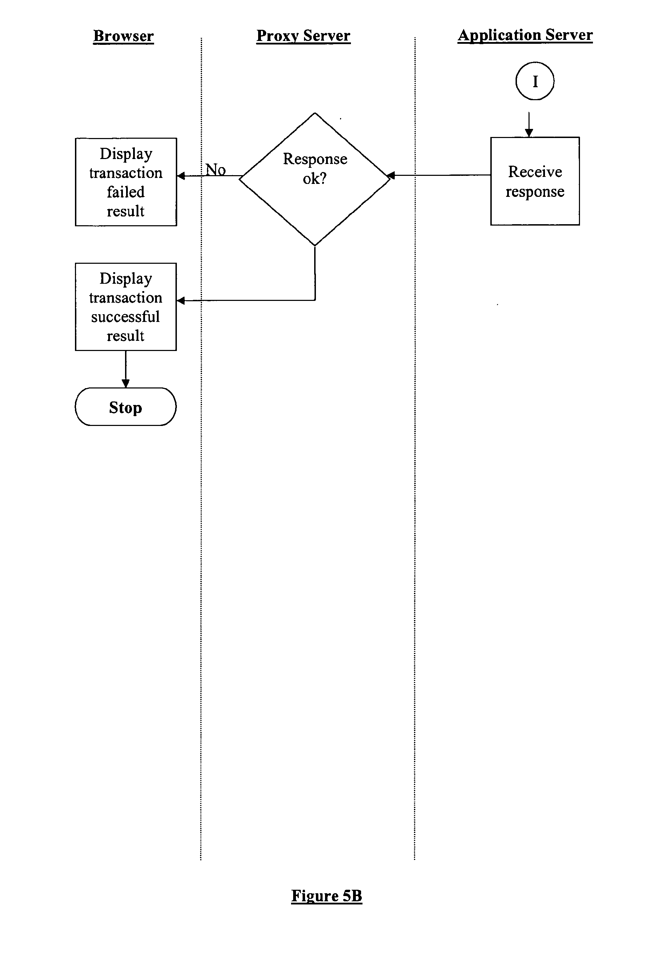

A purchase transaction is described hereunder with reference to Figures 5A and 5B.

Once the user has launched the mobile client software program by activating the application icon (not shown) on the mobile phone (9) and successfully logged in to the B2C application on the application server (2), the user may select, from an application menu, an option for purchasing, as illustrated in step 400. The mobile application software program phone (9) transmits a purchasing request, encrypted with the active encryption key and prefixed with the UIC, to the proxy server (10). The proxy server (10) then, in turn, decrypts the purchasing request using the active encryption key obtained from the proxy database (11) and retrieves, at 402, the encrypted payment instrument data relating to all the user's previously-registered payment instruments and returns this data to the mobile phone (9). The received payment instrument data is decrypted by the mobile client software program on the mobile phone (9) and is then presented, at step 404, to the user as a menu of all the payment instruments that are available to the user.

The user is prompted to select a preferred payment instrument from those listed in the menu, to enter a purchase amount, and to enter his purchase PIN, as shown in step 406. This user-entered data, together with an identifier for a purchase transaction, is encrypted, at 408, using the active encryption key and prefixed with the UID and the separator character, as described above, before being transmitted to the proxy server (10). Upon receiving the user-entered data, the proxy server (10) strips out the UIC and uses this to retrieve the user's active encryption key from the proxy database (11), as illustrated in step 410. The received data is decrypted, at 412, using the active encryption key retrieved from the proxy database (11). The decrypted purchase PIN is Hashed, at 414, and the result is used to decrypt the encrypted payment instrument data corresponding to the preferred payment instrument selected by the user to pay for the purchase, which is stored in the proxy database (11), as shown in step 416. The proxy server (10) then forwards the decrypted preferred payment instrument data and the decrypted purchase amount to the application server (2) where it is used to complete an online payment, usually by means of a payment gateway, in a manner that is well-known in the art and that will not, for this reason, be described here in detail.

### Third-Party Referral

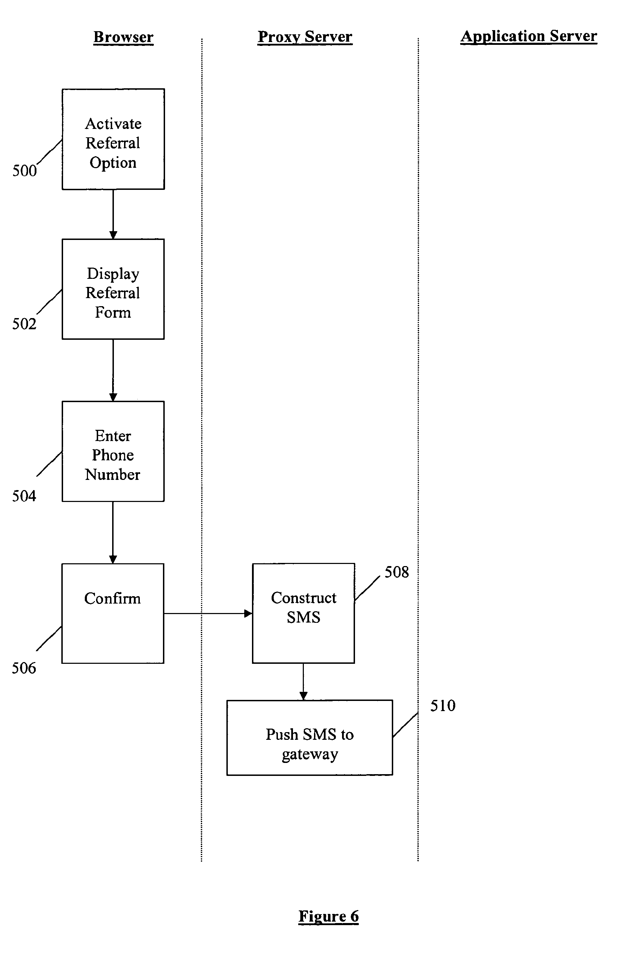

A referral of the B2C application to third parties is described below with reference to Figure 6.

Once the user has launched the mobile client software program by activating the application icon (not shown) on the mobile phone (9) and successfully logged in to the B2C application on the application server (2), the user may select, from the application menu, an option to invite a friend, acquaintance, colleague, or the like, to obtain access to the B2C application, as illustrated in step 500. For example, this particular option in the application menu may be labeled "Send to a Friend", but will be referred to in this specification as a "third party referral", for convenience.

When the user selects the third party referral option from the application menu, the mobile client software program displays, at step 502, a third party referral form (not shown) to the user on the mobile phone (9). The third party referral form contains a field in which the user is prompted to enter a mobile phone number of a person to whom the referral is to be sent. The third party referral form (not shown) also contains a further field that is pre-populated with the user's mobile phone number, which the user will have previously included in data submitted to the proxy server (10) as part of the mobile registration form for the B2C application. Once the user has responded to the prompt, at step 504, and entered the mobile phone number of the person to whom the referral is to be sent, the mobile client software program transmits, at step 506, the data in the referral form to the proxy server (10). After receiving the referral data, the proxy server (10) uses the data to construct, at step 508, a standard SMS message as follows: the addressee of the SMS message is the mobile phone number of the third party to whom the referral is to be sent, while the sender of the SMS message is the user's own mobile phone number. The contents of the SMS message include succinct instructions as to how the recipient can download mobile client software associated with the B2C application, as well as a download link to the dedicated web page from which the mobile client software can be downloaded to the recipient's own mobile phone (9)

The proxy server (10) transmits the SMS message to the SMS gateway server (14), at step 510, which injects the SMS message onto a mobile telecommunication network (16). The mobile telecommunication network delivers the SMS message to the mobile phone (9) of the party to whom the referral was addressed, and the recipient can then either accept the invitation and download the mobile client software program as directed in the SMS message, or can simply disregard the SMS message.

It will be appreciated by those skilled in the art that the third party referral SMS message will be seen by the recipient as originating from the sender (who, presumably, is known to the recipient) and not from an entity that operates or that is associated with the B2C application. The referral SMS will be perceived by both the recipient and an operator of the mobile telecommunication network as a personal SMS and not as spam. Further, the user is unable to alter the referral SMS message in any way, as it is derived automatically from third party referral data that is processed by the proxy server (10). Thus, the sender will be unable to abuse the facility to send a free SMS message to the third party. The third party referral facility provides a very low cost method of acquiring new users to the B2C application.

### Call Back

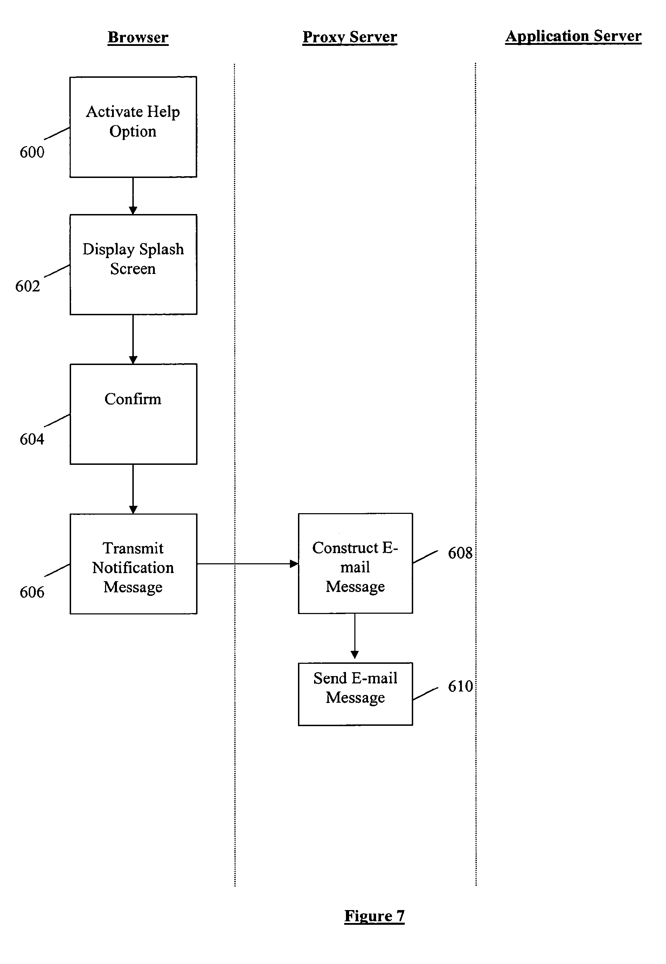

A call back function whereby a user may request assistance in connection with the B2C application is described below with reference to Figure 7.

At any time after the user has launched the mobile client software program by activating the application icon (not shown), the user is able to select, from the application menu, an option to request help and assistance in connection with use of the B2C application, as illustrated in step 600. As an example, this particular menu option is labeled "Help & Support".

When the user selects the Help & Support option from the application menu, the mobile client software program displays a splash screen (not shown) to the user on the mobile phone (9), at step 602. The splash screen (not shown) contains an icon labeled "OK" and an instruction such as, for example, "Press OK to request Call Centre assistance". The user confirms the instruction, at step 604, by activating the OK icon, whereupon the mobile client software program transmits a predetermined notification message to the proxy server (10) at step 606. Upon receiving the predetermined notification message from the user's mobile phone (9), the proxy server (10), at step 608, constructs a standard e-mail message with the following characteristics: the destination address of the e-mail message is that of dedicated mailbox of a call centre (not shown) manned by staff capable of providing help and support services to users of the B2C application; and the body of the message consists of a standard template message together with the originating user's contact particulars (such as, for example, the user's mobile phone number and account number) that are retrieved from the proxy database (11) and the application user database (7),

The proxy server (10) sends the e-mail message, at step 610, to the call centre mailbox (not shown) where it can be opened by support staff that can access the originating user's B2C account by means of appropriate back-office tolls, and then call the user on the user's mobile phone (9) and provide any help and support that is required.

It will be appreciated by those skilled in the art of the invention that all communication between the mobile phone (9) and the proxy server (10) is encrypted. Further, communication between the proxy server (10) and the application server (2) does not require any changes to be made to the application server (2), leaving the legacy application on the application server unaltered.

During the registration for mobile use, the system (1) verifies that the user is the same person as one who is registered on the application user database (7) as an authorized user of the B2C application. The proxy server (10) encrypts the user's login name and password and stores them in the proxy database (11), thus enabling the user to login to the application server (2) without having to re-enter the login name and password and to transmit the login name and password over the air - only the user's pre-selected PIN is necessary to effect the login. The PIN code selected by the user, as part of the registration process, constitutes the only piece of information that will be required for subsequent access to the B2C application from the mobile phone (9);

The proxy server (10) downloads a unique, personalized, version of the B2C application to the user's mobile phone (9), which is subsequently installed on mobile phone, the B2C application being personalised by means of an embedded activation code that serves as a dynamic encryption engine for ongoing, secure transfer of data from the mobile phone to the proxy server (10), and from there to the application server (2).

It will be further appreciated by those skilled in the art that the use of a proxy server and a proxy database (11) in a manner described above does not require any changes or modifications to be made to the application server (2) or the application user database (7) in order to access the B2C application from the mobile phone (9). This characteristic enables existing B2C applications to be migrated to mobile telecommunication devices without affecting existing backend legacy systems.

Numerous modifications are possible to this embodiment without departing from the scope of the invention. In particular, communication between the proxy server (10) and the application server may also be encrypted, such as when HTTPS is used for secure communication. Further, the downloading of the mobile client software program may take place, not from the proxy server (10), but rather from a separate download server (not shown) that is in communication with the proxy server, thereby decoupling the download and communication intermediary functions of the download server. Still further, the commercial application may be a business-to-business ("B2B") application as opposed to a B2C application.

Yet further, the system (1) can also allow multiple B2C and B2B applications to be downloaded and installed on the mobile phone (9), each commercial application having a corresponding application icon (not shown). In this particular variation of the system, the proxy server (10) stores in the proxy database (11) an encryption key and a user-selected PIN corresponding to each one of the multiple B2C and B2B applications installed on the mobile phone (9). Each B2C and B2B application will have a different UIC, since each application does not have to co-operate with the same proxy server (10). In this topology, each B2C and B2B application will embed a different proxy server address. Additionally, each proxy server (10) may use a different proxy database (11), or all proxy servers may utilise a common proxy database. Similarly, the multiple B2C and B2B applications may be served by the same application server (2), or may be served by different application servers.

The mobile client software program could be such that the user does not have to be logged in to the B2C application in order to invoke and to use the third party referral option. For example, the third party referral option could be made available to the user from the main menu of the lobby of the online casino, that is, before user login and authentication takes place. The proxy server (1), at this stage, is already able to identify the user based on the number of the user's mobile phone (9).

The mobile client software program may also include a facility capable of detecting whether the user's mobile phone (9) is not Internet-enabled by means of GPRS or UMTS services. In the event that the user's mobile phone (9) has either of these services, the mobile client software program transmits the notification message to the proxy server (10) by normal Internet connection. If the user's mobile phone (9) does not have either of these services, the mobile client software program transmits the notification message to the proxy server (10) SMS.

Additionally, as previously stated, the system (1) and its underlying method of operation does not only find application in connection with a B2C application such as an online casino, but can be used for other B2C applications. For example, the B2C application may be one in which a user can purchase ring tones for a mobile phone from a commercial entity. A ring tone that is purchased by a user is downloaded from a server and transmitted over the air to the user's mobile telephone. As part of such a download the server can include an application that is installed on the user's mobile phone (9) and that allows the recipient of the ring tone to recommend the ring tone to a friend or colleague by a procedure analogous to that described above in relation to third-party referrals. In general, the third-party referral aspect of the system (1) can be used advantageously, in general, for marketing, promotional, and non-casino gaming applications. This list is, however, non-exhaustive.

The invention therefore provides a system for performing mobile commercial transactions that provides secure user access from mobile telecommunication devices by means of a simplified login procedure. The system does not require modification of legacy backend systems, and includes effective third-party referral and support request facilities.

## Claims

1. A system for conducting commercial transactions, comprising: an application server operable to host a software application for performing commercial transactions, the application server being accessible by at least one user from a mobile access terminal that hosts a corresponding client software program
**characterised in that**
the client software program is operable to receive an input code from the user identifying a recipient to whom the software application is to be referred; and
the system includes means for constructing and transmitting a referral message to the recipient, the referral message containing at least
a) the input code identifying the recipient;
b) a code identifying the user from whom the referral originated; and
c) an address of a download location from which the recipient of the referral message can download the client software program to a different mobile access terminal.

2. A system as claimed in claim 1 in which the means for constructing the referral message is a proxy server communicable with the application server, the proxy server enabling access to the application server from the at least one user's mobile access terminal.

3. A system as claimed in claim 1 in which the mobile access terminals of the at least one user and the recipient are mobile telephones having corresponding telephone numbers.

4. A system as claimed in claim 3 in which the referral message is an SMS message.

5. A system as claimed in claim 3 in which the input code identifying the recipient of the referral message is the mobile telephone number of the recipient.

6. A system as claimed in claim 3 in which the code identifying the at least one user from whom the referral message originated is the mobile telephone number of the user who made the referral.

7. A system as claimed in claim 3 in which the proxy server transmits the referral message to an SMS gateway server.

8. A system as claimed in claim 1 in which the client software program on the at least one user's mobile access terminal is operable by the user to request help and assistance relating to the software application.

9. A system as claimed in claim 8 that includes means for constructing and transmitting a request message pursuant to a request by the at least one user for help and assistance.

10. A system as claimed in claim 9 in which the request message contains at least:
d) an address of a call centre providing help and support services to users of the software application;
e) a code identifying the user from whom the request message originated; and
f) a request for assistance.

11. A system as claimed in claim 9 in which the means for constructing and transmitting the request message is the proxy server.

12. A system as claimed in claim 11 in which the proxy server constructs and transmits the request message to the call centre pursuant to receipt of a notification message from the at least one user's mobile access terminal.

13. A system as claimed in claim 12 in which the notification message from the at least one user's mobile access terminal is submitted to the proxy server by means of the Internet when the mobile access terminal is Internet-enabled and as an SMS message when the mobile access terminal is not Internet-enabled.

14. A system as claimed in claim 10 in which the code identifying the user from whom the request message originated is a mobile telephone number of the at least one user from whom the request originated.

15. A method of operation of a system for conducting commercial transactions, including the steps of:
hosting, on an application server, a software application for performing commercial transactions;
providing access to the application server by at least one user from a mobile access terminal hosting a corresponding client software program
**characterised in that**
the method includes further steps of
receiving an input code from the user identifying a recipient to whom the software application is to be referred; and
constructing and transmitting a referral message to the recipient, the referral message containing at least
a) the input code identifying the recipient;
b) a code identifying the user from whom the referral originated; and
c) an address of a download location from which the recipient of the referral message can download the client software program to a different mobile access terminal.

16. A method as claimed in claim 15 in which the referral message is constructed by means of a proxy server communicable with the application server, the proxy server enabling access to the application server from the at least one user's mobile access terminal.

17. A method as claimed in claim 15 in which mobile telephones are used as the mobile access terminals of the at least one user and the recipient, respectively, the mobile telephones having corresponding telephone numbers.

18. A method as claimed in claim 17 in which the referral message is constructed as an SMS message.

19. A method as claimed in claim 17 in which the mobile telephone number of the recipient is used as the input code identifying the recipient of the referral message.

20. A method as claimed in claim 17 in which the mobile telephone number of the at least one user who made the referral is used as the code identifying the user from whom the referral message originated.

21. A method as claimed in claim 17 in which the referral message is transmitted from the proxy server to an SMS gateway server.

22. A method as claimed in claim 15 that includes a step of receiving a request from the at least one user's mobile access terminal for help and assistance relating to the software application.

23. A method as claimed in claim 22 in which a request message is constructed and transmitted pursuant to the request by the at least one user for help and assistance.

24. A method as claimed in claim 23 in which the request message is constructed to contain at least
d) an address of a call centre providing help and support services to users of the software application;
e) a code identifying the user from whom the request message originated; and
f) a request for assistance.

25. A method as claimed in claim 23 in which the request message is constructed and transmitted by means of the proxy server.

26. A method as claimed in claim 25 in which the request message is constructed and transmitted to the call centre pursuant to receipt of a notification message from the at least one user's mobile access terminal.

27. A method as claimed in claim 26 in which the notification message from the at least one user's mobile access terminal is submitted to the proxy server by means of the Internet when the mobile access terminal is Internet-enabled and as an SMS message when the mobile access terminal is not Internet-enabled.

28. A method as claimed in claim 24 in which the mobile telephone number of the at least one user from whom the request originated is used as the code identifying the user from whom the request message originated.
